# EUROPEAN PATENT APPLICATION

(11) **EP 2 522 981 A1**
(43) Date of publication of application: **14.11.2012**
(21) Application number: 11165337.4
(22) Date of filing: 09.05.2011
(51) Int. Cl.: G01N 15/02, G01N 21/53, G01N 21/64

(54) **Compact 2D light detection system for on-chip analysis**

(71) Applicant: UNIVERSITEIT TWENTE, 7522 NB Enschede (NL); Technology Foundation (Stichting voor de Technische Wetenschappen), 3527 JP Utrecht (NL)
(72) Inventor:
(74) Representative: Ellens, Andries

(57) **Abstract**

The invention provides a detection system for analysis of a liquid in a micro-fluidic device comprising (a) a micro-fluidic device holder configured to hold a micro-fluidic device comprising a device channel, (b) an optical pickup with therein integrated said device holder, (c) an analysis setup with (i) a light source for providing a beam of light, (ii) adjustable optics for adjustably directing and/or shaping the beam of light, and (iii) a detector for detecting radiation from the liquid. The light source and the optics are configured to illuminate part of a liquid. The analysis setup provides the beam of light at the device channel. The detection system further comprises an actuator configured to scan with the beam of light of the light source the liquid in at least one dimension.

## Description

### Field of the invention

The invention relates to a method for the analysis of a liquid, especially of particles therein, in a micro-fluidic device as well as to a detection system for analysis of such liquid in a micro-fluidic device.

### Background of the invention

Detection systems for liquids in lab-on-a-chip (LOC) devices are known in the art. US2003/0164944 for instance describes an apparatus for determining the shape and/or size of small particles, the apparatus comprising a cell into which the particles are placed, at least one light source for illuminating the particles, and at least one one-dimensional image sensor for measuring an image of the illuminated particles. The cell is embodied as a conduit through which the particles can be transported, and the image sensor is placed in the immediate vicinity of the conduit or into the conduit. Especially, this document describes an apparatus for determining the shape and/or size of small particles, comprising a conduit through which the particles can be transported, at least one light source for illuminating the particles, and at least one one-dimensional image sensor for measuring an image of the illuminated particles which is placed in the immediate vicinity of the conduit, in the near field (Fresnel zone) of the particles, wherein the apparatus comprises multiple light sources and image sensors that are grouped around the conduit for the formation of the image.

Further, US2010/0032582 describes a fluorescence detection system, comprising (a) a positionable micro fluidic chip configured to define a channel for loading a sample therein, (b) a light source configured to produce an excitation light, (c) an optical lens configured to focus the excitation light to the sample to emit fluorescence and to collect the fluorescence, (d) a fiber bundle probe comprising a transmitting fiber configured to transmit the excitation light to the optical lens, and a first receiving fiber configured to deliver the collected fluorescence, (e) a first detector configured to detect the fluorescence delivered by the receiving fiber to generate a response signal, (f) a processing unit configured to determine information about the samples by analyzing the response signal and to generate one or more intensity peak, and (g) wherein the chip is positionable based at least in part on one or more of the intensity peaks.

For sperm analysis, often flow cytometry is applied. US4559309 for instance, describes flow cytometry fluorescence for characterizing sperm motility and viability by staining a sperm sample with Rhodamine 123 and ethidium bromide, and simultaneously measuring the sperm fluorescence emissions at green frequencies 515-575 nm and at red frequencies 600-650 run, the green counts being correlated with sperm motility and the red counts being correlated with putative dying or dead cells. Additionally, a sample of sperm can be characterized as to type and normality by staining a sample of sperm with acridine orange and simultaneously measuring the sperm fluorescence emissions at green frequencies 515-575 nm and at red frequencies 600-650 nm.

### Summary of the invention

For the analysis of cells using flow cytometry an expensive and complex system is needed that is operated by trained technicians. Furthermore the amount of cells that needs to be tested with the system is large, such that a relatively large sample and reagent volume is needed during analysis. With flow cytometry the cells are focussed and detected by a laser beam at a fixed position. When a fluorescent particle passes the beam, it emits a fluorescence signal that is detected. So the fluorescence response of the whole cell is measured and no spatial information of the fluorescence on the cell is available. Also focussing of the cells is needed. The main problems with the actual technology are that it cannot be used outside the laboratory by untrained people and the technique is not widely available due to the costs of the system. Also the intensity of the whole cell is measured instead of giving spatial information.

Hence, it is an aspect of the invention to provide an alternative method for the analysis of cells, such as spermatozoa, but optionally also of other particles in a liquid, as well as a detection system that can be used for such method, which preferably further at least partly obviates one or more of above-described drawbacks.

The present invention suggests using a micro-fluidic chip (further indicated as micro-fluidic device) together with a holder, especially a pickup system with such a holder, such as a widely available optical pickup, that is combined with a detector, such a semiconductor photo detector (like a semiconductor photomultiplier) and various optical components such as lenses and filters. In an embodiment, the micro-fluidic device has optical markers on it, enabling the system to automatically locate the microchannel(s) in it. For the optical detection system, parts of a HD-DVD pickup may be used, such as the focus system, the laser diodes (like 405 nm, 660 nm and 780 nm) and lenses. With the detection system it is possible to do a real-time 2-dimensional scan in the micro-channel(s) (further also indicated as device channel(s)), such that particles or cells in the channel can be 2-dimensionally detected. This is in contrast with flow cytometry where the laser beam of the system is not moved, but the cells or particles are focussed in a narrow beam that crosses the laser beam. Therefore only general information about the single cell and particle that crosses the beam is generated. Hence, especially with the use of the optical pickup in combination with the micro-fluidic device, costs may be reduced, a compact system may be obtained, only small reagent and sample volumes are needed and a 2-dimensional scan of the fluorescent particles or cells can be made.

In addition, the present system allows an easy evaluation of the particle dimensions in the fluid, but also other properties, like particle flow speed in the liquid. From those data, for instance viability of spermatozoa may be evaluated. Due to the small dimension of the detections system and the relative simple technology, home-application may be possible, which is more convenient for users. However, the detection system may also used for other applications, such as veterinary and environmental applications. Particles in (waste)water may be detected, etc. Hence, with the present invention, easy, quick, cheap, and on-site analysis may be possible, especially of particles in a liquid (that is transported to a device channel of the micro-fluidic device).

Hence, in a first aspect, the invention provides a method for the analysis of a liquid in a micro-fluidic device, the method comprising (a) providing a micro-fluidic device comprising a device channel configured to host a liquid, (b) providing a micro-fluidic device holder configured to hold the micro-fluidic device, (c) providing an analysis setup, comprising (i) a light source configured to provide a beam of light, (ii) adjustable optics configured to adjustably direct or shape or direct and shape the beam of light, wherein the light source and the optics are further configured to illuminate part of the liquid in the device channel, and (iii) a detector configured to detect radiation emanating from the liquid, (d) and arranging the micro-fluidic device in the device holder, providing the liquid in the device channel, scanning with the beam of light of the light source the liquid in at least one dimension, and measuring the radiation emanating from the liquid.

With such method, easily 2D (or higher) images may be provided, by transporting a liquid through the device channel and scanning (in 1D or higher) with the beam the liquid.

The analysis setup will in general be configured to provide a beam in the device channel, wherein the beam has a cross-section dimensions (at the focal point of the beam) much smaller than of channel width and height. The cross-section of the beam in the liquid channel, at a focal point, may have a width and a length, or may have a diameter, indicated as beam cross-section dimension b_{d} and the channel may have a width indicated with channel width c_{w}, wherein b_{d}<<c_{w}. For instance, the cross-section of the beam at the focal point may have dimensions in the range of about 0.0005 mm (or even smaller) and the channel width may for instance be in the range of 0.001-5 mm, such as 50-500 µm. When a plurality of beams is used, such as indicated in embodiments below, these beam conditions may apply to each beam.

Especially, in an embodiment the analysis setup is further configured to provide at least two beams of light at the device channel, wherein preferably at least two of the beams of light are in line (parallel) with a longitudinal axis of the device channel. Hence, the method of the invention further includes in a specific embodiment scanning with at least two beams of light of the light source the liquid in at least one dimension.

In such a way, a particle flowing through the device channel may first be detected by a first beam, and subsequently be detected by a second beam. This distance between the beams, especially the distance at their focal points, may set to be substantially constant. Hence, the beams sweep or scan parallel.

The analysis setup may be configured to provide two beams, but also three or more beams can be provided. In general, their focal points will be at constant distance of each other.

The analysis setup can be configured to provide a plurality of beams in different ways, which may be applied independently or combined. For instance, beam splitters can be used to provide two or more beams. Also two or more light sources may be applied. A grating may also be applied. Further, fiber optics may be applied, with a plurality of fibers. Further, the source may generate per se a plurality of beams. For instance, a (laser) beam may be accompanied by wings. Dependent upon the type of source and its construction, the wings may be strong enough to be used as additional (satellite) beams.

The advantage of using a plurality of beams, especially when configured in such a way that at least two of the beams are parallel (especially their focal points) to the longitudinal axis of the device channel, is the option to derive from the detector signal one or more of (i) a dimension of a particle of the particulate material in the liquid and (ii) a flow speed of a particle of the particulate material in the liquid (assuming particulate material is in the liquid), such as spermatozoa. Hence, the method of the invention may further comprise deriving from the detector signal one or more of (i) a dimension of a particle of the particulate material in the liquid and (ii) a flow speed of a particle of the particulate material in the liquid.

Assuming a liquid comprising spermatozoa, such as semen, the use of method of the invention and/or the use of the detection system of the invention may allow for the analysis of a spermatozoon in a liquid comprising a spermatozoon. Especially, it may allow for the analysis of a spermatozoon on one or more of (i) a dimension of a spermatozoon (ii) a spermatozoon concentration, and (iii) a spermatozoon viability. Optionally or additionally, the method of the invention and/or the detection system of the invention may also be used for one or more of (iv) DNA measurement and (v) acrosome measurement (for instance, acrosome integrity). Hence, in an embodiment, the liquid further comprises particulate material. For instance, the particulate material may comprise a biological cell, especially a spermatozoon.

In general, the method of the invention further comprises flowing the liquid through the device channel. When scanning in 1 direction (back and forth) perpendicular to the longitudinal axis and with the focus of the beam in the plane of the microfluidic device, this may provide a 2D picture, with one dimension being time.

As indicated above, the method includes scanning the liquid in at least one dimension. This may in principle be in any direction. The invention thus allows 1D, 2D and 3D scanning of the liquid, dependent upon the degrees of freedom of the adjustable optics configured to adjustably direct or shape or direct and shape the beam of light. The directional function of the beam may allow a scanning in the x-direction and/or an y-direction. Assuming the x-direction to be parallel to the longitudinal axis, the y-direction may be perpendicular to the longitudinal direction and in plane with the micro-fluidic device. With the directional function and/or optionally with the shaping optics, such as lenses, scanning in the z-direction (depth-scanning) may be allowed.

Adjustment of and scanning with the beam(s) may be performed by moving optics such as lenses, by which the beam(s) can be directed and or shaped. To this end, the detection system further comprises an actuator to scan with the beam(s) of light of the light source in at least one dimension. The actuator may for instance be configured to actuate two (or more) lenses (adjustable optics) arranged in the illumination beam. The actuation may include a movement in one or more directions selected from the x-direction, the y-direction and the z-direction for one or more of the lenses. In general, the y-direction will be used.

As indicated below, conventional pick-up systems, such as CD or DVD pick-up systems may be applied. Preferably, the adjustable optics are configured to allow at least scanning in a direction perpendicular to the longitudinal axis of the device channel and in plane with the micro-fluidic device. Especially this functionality may allow the above mentioned options of deriving from the detector signal one or more of (i) a dimension of a particle of the particulate material in the liquid and (ii) a flow speed of a particle of the particulate material in the liquid.

Especially, the method includes in an embodiment that the analysis setup scans with a scan speed vₛ and the liquid flows through the device channel with a flow speed v_{f}, wherein vₛ > v_{f}. Hence, the detection system may in an embodiment be configured to scan (with the beam(s)) with a scan speed vₛ and to flow the liquid through the device channel with a flow speed v_{f}, wherein vₛ > v_{f}. For instance, the analysis setup may scan / sweep with a frequency in the range of 2-500 Hz, such as 5-200 Hz, like 10-100 Hz. Scans speeds that may be reached may for instance be in the range of 0.01-2500 mm/s and flow speeds of the liquid may for instance be in the range of 0.001-5 mm/s. Preferably, the scan speed of the beam is at least 5 times, more preferably at least 10 times, especially at least 20 times larger than the flow speed of the liquid.

Note that the flow speed a particle may not be identical to the flow speed of the liquid. For instance, assuming spermatozoa, these may due to their mobility, have a flow speed differing in value and differing in direction from the "main stream".

In an embodiment, the light source may comprise a laser. The terms "light source" and "laser" may in embodiments also refer to a plurality of light sources and a plurality of lasers, respectively. The laser may be any laser, such as especially a solid state laser or a laser diode. Especially, the light source is configured to provide light in the UV, visible or IR range, especially in the range of 180-2000 nm. As will be clear to a person skilled in the art, the micro-fluidic device may thus comprise transparent parts. For instance, a bottom part or a top part (such as a cover) may be transparent. In an embodiment, substantially the entire micro-fluidic device is transparent.

The term "transparent" here may especially indicate that material has a light transmission in the range of 50-100 %, especially in the range of 70-100%, for light generated by the lighting source. The transmission or light permeability can be determined by providing light at a specific wavelength with a first intensity to the material and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

Transparent materials that may for instance be used may be selected from the group consisting of PE (polyethylene), PP (polypropylene), PEN (polyethylene napthalate), PC (polycarbonate), polymethylacrylate (PMA), polymethylmethacrylate (PMMA) (Plexiglas or Perspex), cellulose acetate butyrate (CAB), polycarbonate, polyvinylchloride (PVC), polyethyleneterephthalate (PET), (PETG) (glycol modified polyethyleneterephthalate), PDMS (polydimethylsiloxane), COC (cyclo olefin copolymer), glass, (fused) quartz, and silicone. Especially preferred are PMMA, transparent PVC, or glass.

As detector, any detector may be applied which is able to detect light (radiation) from the liquid and/or the particulate material therein (if any). The detector may for instance comprise a photo-multiplier. The detector may also comprise a semi-conductor detector. The term "detector" may in an embodiment also relate to a plurality of detectors.

The detection system may be configured to measure one or more of transmission, absorption, reflection, excitation and emission, especially transmission, absorption, reflection and emission. Especially, the detection system is configured to measure emission. Measurements may in an embodiment be time resolved. Dependent upon the type of measurement, the detector may be configured to measure light emanation from the liquid at the same side where the light source is configured to illuminate the liquid, but may in another embodiment be configured to measure light emanation from the liquid at the other side than where the light source is configured to illuminate the liquid. When measuring transmission and absorption, in general the latter configuration will be chosen. When measuring reflection, in general the former configuration will be chosen. When measuring excitation or emission, both configurations may be chosen, though the former may be preferred (see also accompanying drawings).

In an embodiment emission or luminescence is measured. For this reason, the detection system is herein also indicated as "(compact) 2D fluorescence detection system for on-chip analysis". However, the invention is not limited to fluorescent detection only. The term "fluorescence" is herein used as general term for luminescence.

Note that transmission, absorption, reflection, excitation and emission may relate to spectral behavior of the liquid and/or of a particle (if present) in the liquid.

The micro-fluidic device will in general be kept in place with a device holder. The device holder may be any device to fix, in a preferably detachable way, the micro-fluidic device. In general, the device holder will be integrated in the detection system, especially with the analysis set-up. As indicated above, the detection system may for instance comprise an optical pickup. In an embodiment, the device holder may be integrated with the optical pickup. The integration of the device holder in the optical pickup may be configured to be detachable or non-detachable. As indicated above, the fixation of the micro-fluidic device in the device holder may in general be detachable. In this way, different micro-fluidic devices may be analyzed sequentially.

One or more of the micro-fluidic device and the device holder may comprise optical markers for facilitating alignment of the micro-fluidic device and the analysis setup. The detection system may also be configured to use the optical markers as reference(s) for the scanning beam. In this way, the beam may scan for instance over the entire channel width, cross the channel edge and when an optical marker is detected, sweep back, until an optical marker at the other side is detected.

Hence, in an embodiment the micro-fluidic device comprises optical markers for facilitating alignment of the micro-fluidic device and the analysis setup, and additionally or alternatively, in an embodiment the device holder comprises optical markers for facilitating alignment of the micro-fluidic device and the analysis setup.

Hence, the invention not only provides a method for the analysis of a liquid in a micro-fluidic device, but also provides a detection system, for instance for use in such method, wherein the detection system comprises (a) a micro-fluidic device holder configured to hold a micro-fluidic chip comprising a device channel, (b) an optical pickup, wherein the device holder is integrated with the optical pickup, (c) an analysis setup, comprising (i) a light source configured to provide a beam of light, (ii) adjustable optics configured to adjustably direct or shape or direct and shape the beam of light, wherein the light source and the optics are further configured to illuminate part of a liquid in the device channel, and (iii) a detector configured to detect radiation emanating from the liquid, wherein the analysis setup is configured to provide (preferably at least two) beam(s) of light at the device channel, wherein preferably, when applying at least two beams of light, the at least two of the beams of light are in line with a longitudinal axis of the device channel, and (d) an actuator configured to scan with the beam of light (or preferably the at least two beams) of the light source the liquid in at least one dimension.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The device(s) or system(s) herein are amongst others described during operation. As will be clear to the person skilled in the art, the invention is not limited to methods of operation or devices in operation. Especially, the detection system of the invention is not limited to embodiments wherein a micro-fluidic device is hold by the holder, and is especially not limited to embodiments wherein a liquid is present in the micro-fluidic device.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to a system or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figs. 1a-1b schematically depict embodiments of the micro-fluidic device;
Figs. 2a-2b schematically depict embodiments of the detection system; and
Figs. 3a-3e schematically depicts some aspects of the micro-fluidic device and measuring with one or more beams.

The drawings are not necessarily on scale.

### Description of preferred embodiments

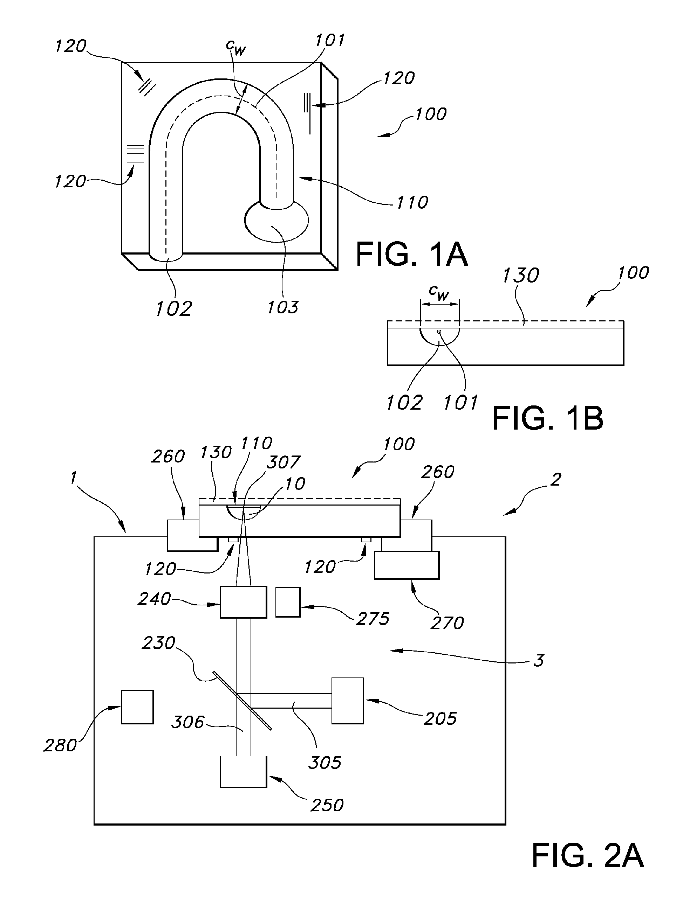

Figs. 1a-1b schematically depict embodiments of the micro-fluidic device.

The micro-fluidic device is indicated with reference 100. The micro-fluidic device 100 comprises a device channel 110. The device channel 110 may have a width c_{w} (see fig. 1b (side view or cross-sectional view)), for instance in the range of 0.001-5 mm.

By way of example, figure 1b schematically depicts a curved device channel 110. As will be clear to the person skilled in the art, the device channel 110 may also be straight or comprise a plurality of curves, such as for instance a meandering structure.

By way of example, the device channel has a top opening 103 (for instance as entrance) and a side opening 102 (for instance as exit). Liquid may flow from one opening to the other opening. As will be clear to the person skilled in the art, also both openings may be top openings or side openings. Further, the channel may in an embodiment split in different channels, with for instance each channel having an own (exit) opening. Channels may also merge, etc.

By way of example, the micro-fluidic device 100 is shown to comprise optical markers 120. Those may be used for facilitating alignment of the micro-fluidic device 100 and the analysis setup (see below). The markers may be on top of the micro-fluidic device 100 and/or on its bottom. Fig. 1b schematically depicts the micro-fluidic device 100 including a cover 130. The cover may (also) comprise optical markers 120 and/or the cover 130 may be transparent, thereby allowing the optical markers 120 to be perceived through the cover 130. The dotted line in fig. 1a schematically depicts a longitudinal axis of the device channel 110.

Figure 2a schematically depicts an embodiment of the detection system, indicated with reference 1. The detection system 1 can be used for analysis of a liquid in the micro-fluidic device 100. This schematic drawing shows the detection system 1 comprising a micro-fluidic device holder 260 configured to hold the micro-fluidic device 100. The detection system 1 further comprises an optical pickup 2. The device holder 260 may be integrated with the optical pickup 2, for instance as (detachable) part.

The use of an optical pickup (HD-DVD) to detect fluorescent particles or cells in two dimensions in a micro channel is novel. Focussing of the cells or particles is not needed, since the cells or particles are not measured at one fixed point by focussing the particles or cells as used by others. The advantage of this system is that a cheap optical pickup is used that has already a lot of functionality in it, reducing the costs and complexity. Due to the optical pickup 2-dimensional scanning of the channel can be easily done. In conventional flow cytometry, fluorescent labelling is not always necessary since the forward and sideward scatter detected with the system gives also information about the cell. Forward scatter gives information about the size of the cell. This can be obtained by the 2-dimensional picture measured with our system. Also an electrical impedance measurement system can be easily integrated in the microfluidic device. However, information of the sideward scatter is not obtained and this is a disadvantage. The present system may use the 405 nm laser diode since this diode gives the best resolution (due to lower wavelength). The use of this (short) wavelength is new and therefore only a limited amount of dyes are available. However it is still possible to measure at longer wavelength, since the HD-DVD is backward compatible to conventional CD (780 nm) and DVD (660 nm) formats.

The detection system 1 further comprises an analysis setup 3 which comprises a light source 205, such as a laser, or a plurality of laser, configured to provide a beam of light 305 (or a plurality of light beams) (herein also indicated as "illumination beam"). The analysis setup 3 further comprises adjustable optics 240 configured to adjustably direct or shape or direct and shape the beam(s) of light 305. Preferably, the beam of light 305 are generated and/or optically shaped in such a way, that a focal point, indicated with reference 307, is in the device channel 110.

In an embodiment, at least two beams of light 305 are provided to the device channel 110, preferably wherein the at least two of the beams of light 305 are in line with the longitudinal axis 101 (see fig. 1a) of the device channel 110.

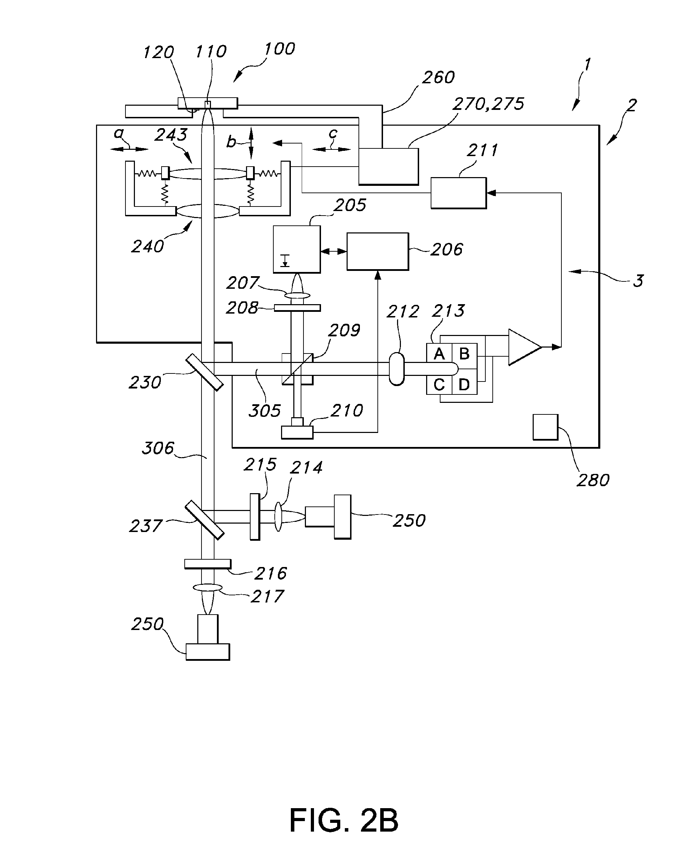

The light source 205 and the optics 240 are further configured to illuminate part of a liquid 10 (when present) in the device channel 110. The analysis setup 3 further comprises a detector 250 configured to detect radiation 306 emanating from the liquid 10. In this embodiment, the detector 250 detects light emanating from the side of the micro-fluidic device 100 which is also illuminated. However, the detector 250 may also be arranged at the other side (assuming the micro-fluidic device (including in an embodiment its cover) is transparent. Note that for spectroscopy at least part of the micro-fluidic device may especially be transparent. Here, in this schematic drawing the body, or at least part of it, of the micro-fluidic device 100 may be transparent. In fig. 2a at least part of the body of the micro-fluidic device 100 may transparent, whereas in fig. 2b schematically an embodiment is shown wherein the cover, or at least part of it, is transparent for light from the light source(s) 205. For alignment, but also for scanning, optical markers 120 are applied (here at the bottom side of the micro-fluidic device 100).

For separating the illumination beam 305 from the light 306 emanating from the liquid 10, in this configuration a beam splitter 230 may be used. Dependent upon its optical properties, the beams may be splitted, reflected and transmitted.

For adjustment of the beam(s) 305 of light and/or for scanning, an actuator 275 may be applied, which may be configured to scan with the at least two beams (305) of light of the light source (205) the liquid (10) in at least one dimension. A specific embodiment of the lens configuration and the actuator options is discussed at fig. 2b. A further actuator 270 may be provided, for (course) adjustment of the holder 260. This actuator may for instance be a slide motor.

Reference 280 relates to a controller, which may be configured to control all electronic components of the detection system 1, such as the actuator(s), the light source(s) and the detector(s).

Fig. 2b is substantially the same as fig. 2a. However, some further (optional) elements are shown. Here, the optics 240 comprise at least two lenses, which may be shifted with transverse actuation (indicated with "a"), focus actuation (indicated with "b") and slide actuation (indicated with "c"). Reference 243 refers to an objective lens, which may for instance be formed by both drawn lenses.

Note that relative to fig. 2a, the micro-fluidic device 100 in fig. 2b is arranged "upside down". In this configuration, at least part of the cover 130 (not depicted for clarity reasons) may be transparent. Reference 205 refers again to a light source, such as a 405 nm laser and reference 206 refers to a laser power controller (may be part of the controller 280). References 207 and 208 refer to a collimation lens and a grating, respectively. Reference 209 refers to a polarizing beam splitter. For instance, a laser power detector 210 may be applied. References 211, 212, 213 refer to a position detector IC controller, a (cylindrical) lens, and position detector IC, respectively.

References 250 refer to two detectors (though one may suffice), such as two photo multipliers. Reference 237 refers to a beam splitter, such as a sub 480 nm reflection / super 480 nm transmission beam splitter. Beam splitter 230 may for instance be a sub 416 nm reflection / super 416 nm transmission beam splitter. References 214-217 refer to a converging lens, a band pass filter (for instance 450 nm (light pass at wavelengths above 450 nm)), a second band pass filter (for instance 525 nm) and a second converging lens, respectively

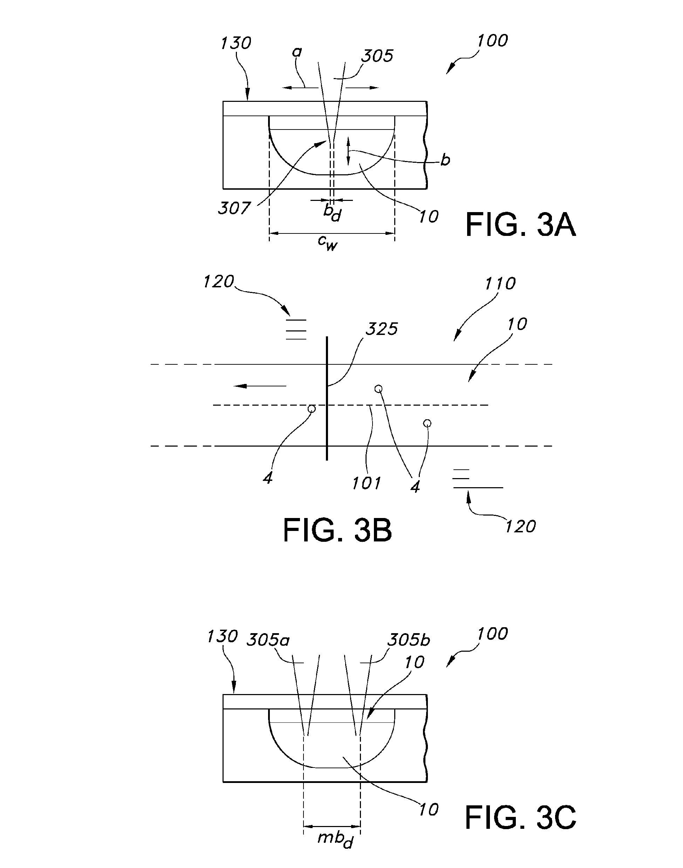

Fig. 3a schematically depicts again a side view / cross-sectional view of the micro-fluidic device 100, now with the device channel 110 containing liquid 10 visibly depicted. In this embodiment, the beam of light 305 travels through a transparent part of the micro-fluidic device 100, here the cover 130 by way of example, and enters the liquid 10. Preferably, the beam of light 305 is focussed in the liquid 10. The focus is indicated with reference 307. The cross-section dimension of the focus are indicated with b_{d} (length/width or diameter), which is in general much smaller than the device channel width c_{w}, like at least 10 times. The beam of light 305 may scan in different in one or more directions (length, width channel or depth channel). In general, the scanning of the beam of light 305 will be over the channel width. This is indicated with reference "a" in this figure. Optionally or additionally, the beam may for instance also scan in depth. This is indicated with the reference "b".

Fig. 3b schematically depicts the result thereof (schematic top view), with a scan track 325 (above this is indicated as the result of an y-direction scanning). The beam 305 may scan over the edges until it reached for instance optical marker 120, indicative of scanning back. In this way, the beam may scan back and forth, while (optionally) the liquid 10 flows through the device channel 110, such as indicated with the arrow. The dots indicate particles (non-dissolved), for instance waste particles. In an embodiment, wherein sperm is analyzed, the particulate material may comprise a spermatozoon as particle. The particles are indicated with reference 4.

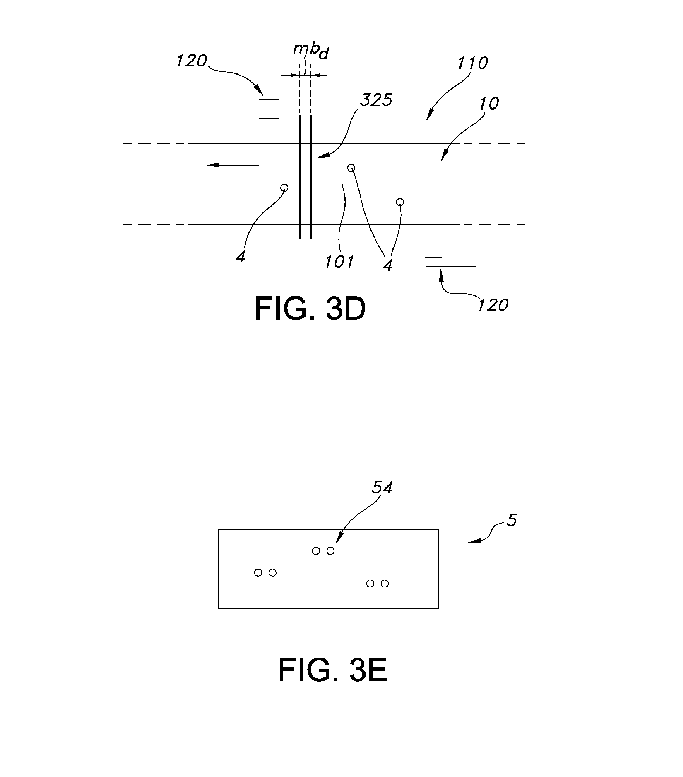

Fig. 3c schematically depicts an embodiment wherein two beams of light 305 are used, indicated with reference 305a and 305b, respectively. The distance between the beams, may be fixed. For instance, the distance between the focal points may be fixed. Said distance is indicated with reference mb_{d}. This distance may for instance be in the order of 2-1000 µm, such as 5-100 µm Note that by way of example, the beams are provided next to each other. In general, they will be provided behind each other, in a configuration parallel to the longitudinal axis (see also for instance fig. 3d).

Fig. 3d schematically depicts the same as fig. 3b, but now when two beams of light 305 are applied, wherein the two of the beams of light 305 are in line with the longitudinal axis 101 of the device channel 110. Then, two parallel tracks 325 are obtained, with the indicated distance (these tracks symbolize the track of the focal points when scanning with the beams).

When flowing the liquid 10 through the device channel as indicated in fig. 3d, an (time) image 5 may be obtained as schematically depicted in fig. 3e. This image may be used to evaluate properties of the particles, such as length and/or flow speed. The images of the particles in this image are indicated with reference 54.

## Claims

1. A method for the analysis of a liquid in a micro-fluidic device (100), the method comprising:
a. providing a micro-fluidic device (100) comprising a device channel (110) configured to host a liquid (10);
b. providing a micro-fluidic device holder (260) configured to hold the micro-fluidic device (100);
c. providing an analysis setup (3), comprising (i) a light source (205) configured to provide a beam of light (305), (ii) adjustable optics (240) configured to adjustably direct or shape or direct and shape the beam of light (305), wherein the light source (205) and the optics (240) are further configured to illuminate part of the liquid (10) in the device channel (110), and (iii) a detector (250 configured to detect radiation (306) emanating from the liquid (10); wherein the analysis setup (3) is further configured to provide at least two beams (240) of light at the device channel (110), wherein at least two of the beams of light are in line with a longitudinal axis (101) of the device channel (110); and
d. arranging the micro-fluidic device (100) in the device holder (260), providing the liquid (10) in the device channel (110), scanning with the at least two beams (260) of light of the light source (205) the liquid (10) in at least one dimension, and measuring the radiation (306) emanating from the liquid (10).

2. The method according to claim 1, further comprising flowing the liquid (10) through the device channel (110).

3. The method according to any one of the preceding claims, wherein the analysis setup (3) scans with a scan speed vₛ and wherein the liquid (10) flows through the device channel (110) with a flow speed v_{f}, wherein vₛ > v_{f}.

4. The method according to any one of the preceding claims, wherein the liquid (10) further comprises particulate material (4).

5. The method according to claim 4, wherein the particulate material (4) comprises a biological cell, especially a spermatozoon.

6. The method according to claims 3-4, wherein the method further comprises deriving from the detector signal one or more of (i) a dimension of a particle of the particulate material in the liquid and (ii) a flow speed of a particle of the particulate material in the liquid.

7. The method according to any one of the preceding claims, wherein the light source (205) comprises a laser and wherein the detector (250) comprises a semi-conductor detector.

8. The method according to any one of the preceding claims, further comprising an optical pickup (2), wherein the device holder (260) is integrated with the optical pickup (2).

9. The method according to any one of the preceding claims, wherein one or more of the micro-fluidic device (100) and the device holder (260) comprise optical markers (120) for facilitating alignment of the micro-fluidic device (100) and the analysis setup (3).

10. A detection system (1) for analysis of a liquid in a micro-fluidic device (100) comprising:
a. a micro-fluidic device holder (260) configured to hold a micro-fluidic device (100) comprising a device channel (110);
b. an optical pickup (2), wherein the device holder (260) is integrated with the optical pickup (2);
c. an analysis setup (3), comprising (i) a light source (205) configured to provide a beam of light (305), (ii) adjustable optics (240) configured to adjustably direct or shape or direct and shape the beam (305) of light, wherein the light source (205) and the optics (240) are further configured to illuminate part of a liquid (10) in the device channel (110), and (iii) a detector (250) configured to detect radiation (305) emanating from the liquid (10); wherein the analysis setup (3) is configured to provide at least two beams (305) of light at the device channel (110), wherein at least two of the beams (305) of light are in line with a longitudinal axis (101) of the device channel (110); and
d. an actuator (275) configured to scan with the at least two beams (305) of light of the light source (205) the liquid (10) in at least one dimension.

11. The detection system (1) according to claim 10, wherein the light source (205) comprises a laser and wherein the detector (250) comprises a semi-conductor detector.

12. The detection system (1) according to any one claims 10-11, wherein the micro-fluidic device (100) comprises optical markers (120) for facilitating alignment of the micro-fluidic device (100) and the analysis setup (3).

13. The detection system (1) according to any one claims 10-12, wherein the device holder (260) comprises optical markers (120) for facilitating alignment of the micro-fluidic device (100) and the analysis setup (3).

14. Use of the detection system (1) according to any one of claims 10-13 for the analysis of a spermatozoon in a liquid comprising a spermatozoon.

15. The use according to claim 14, for the analysis of a spermatozoon on one or more of (i) a dimension of a spermatozoon (ii) a spermatozoon concentration, (iii) a spermatozoon viability, (iv) DNA in a cell, and (v) the integrity of an acrosome.
